# EUROPÄISCHE PATENTSCHRIFT

(11) **EP 4 678 425 B1**
(45) Veröffentlichungstag und Bekanntmachung des Hinweises auf die Patenterteilung: **02.12.2026**
(21) Anmeldenummer: 25187732.0
(22) Anmeldetag: 07.07.2025
(51) Int. Cl.: B60C 25/04, B60C 25/01

(54) **VORRICHTUNG ZUR MONTAGE UND DEMONTAGE EINES REIFENS; VERFAHREN ZUR VORBEREITUNG EINER VORRICHTUNG ZUR MONTAGE ODER DEMONTAGE EINES REIFENS**
DEVICE FOR ASSEMBLING AND DISASSEMBLING A TYRE; METHOD FOR PREPARING A DEVICE FOR ASSEMBLING OR DISASSEMBLING A TYRE
DISPOSITIF DE MONTAGE ET DE DÉMONTAGE D'UN PNEU, PROCÉDÉ DE PRÉPARATION D'UN DISPOSITIF DE MONTAGE OU DE DÉMONTAGE D'UN PNEU

(30) Priorität: 09.07.2024 DE 102024119434
(43) Veröffentlichungstag der Anmeldung: 14.01.2026
(73) Patentinhaber: hubikes GmbH, 71155 Altdorf (DE)
(72) Erfinder: Folwarczny, Hubert, 71155 Altdorf (DE); Eisele, Alexander, 72829 Engstingen (DE)
(74) Vertreter: Patentanwälte Schuster, Müller & Partner mbB

(56) Entgegenhaltungen:
- DE-U1- 202018 100 207
- US-A- 3 918 509
- US-A1- 20240 190 190

## Beschreibung

### Stand der Technik

Die Erfindung geht aus von einer Vorrichtung zur Montage und Demontage eines Reifens, nach der Gattung des Anspruchs 1, und einem Verfahren zur Vorbereitung einer Vorrichtung zur Montage oder Demontage eines Reifens, nach der Gattung des Anspruchs 13.

Vorrichtungen zur Montage und Demontage eines Reifens sind seit Langem Stand der Technik. Der Wechsel des Reifens auf einer Felge stellt eine kostengünstige Alternative zum teuren kompletten Austausch des Rades dar. Neben einer Vielzahl von teuren automatisierten Systemen, finden sich auch viele manuell betriebene Systeme. Beispielsweise offenbart das Gebrauchsmuster DE 20 2018 100 207 U1 eine zusammenklappbare mobile Vorrichtung zur Montage und Demontage von Reifen auf einer Felge, wobei die Vorrichtung ein Gestell mit vier Standarmen zur Lagerung des Reifens und ein Abdrückelement umfasst. Die Arme lassen sich anklappen. Die Auflageelemente sind als Laufschienen ausgestaltet und werden auf das Grundgestell aufgeschoben. Eine vergleichbare Lösung, die zudem noch ein Gelenk am Abdrückarm aufweist, findet sich in der DE 20 2021 104 074 U1. Ein weiteres Beispiel liefert die koreanische Patentanmeldung KR 20100010762 A, bei der ein mit dem Boden verbundener Grundkörper auf einer Platte mehrere verschiebbare Klammern, die dazu dienen, die Felge zu fixieren, und ein Abdrückelement zur Entfernung des Reifens von der Felge aufweist, wobei das Aufziehen und das Abziehen des Reifens an unterschiedlichen Arbeitsplätzen erfolgen kann. Die EP 2 599 649 A1 offenbar ein System zur Abstützung und Fixierung eines Reifens bei der Montage und Demontage auf einer Felge, wobei an rotatorisch ausfahrbaren Armen Auflagen angeordnet sind, die von unten an die Kante der Felge greifen und gegen den Außenrand drücken, um die Felge so zu fixieren. Alternative Vorrichtungen finden sich auch in der US 3,918,509 A1 sowie der US 2024/019019 A1, die beide für spezifische Reifentypen ausgestaltet sind.

Nachteilig an vorgenannten Systemen und Vorrichtungen ist, dass sie jeweils für einen bestimmten Reifentyp vorgesehen sind und für unterschiedliche Reifentypen, beispielsweise von Rollern, Tourenmotorrädern, Motocrossmotorrädern und PKWs, unterschiedliche Vorrichtungen und Systeme zum Einsatz kommen müssen.

Der Erfindung liegt daher die Aufgabe zugrunde, eine die Nachteile des Standes der Technik überwindende Vorrichtung zur Montage und Demontage eines Reifens und ein die Nachteile des Standes der Technik überwindendes Verfahren zur Vorbereitung einer Vorrichtung zur Montage oder Demontage eines Reifens bereitzustellen.

### Die Erfindung und ihre Vorteile

Die erfindungsgemäße Vorrichtung zur Montage und Demontage eines Reifens, mit den Merkmalen des Anspruchs 1, und das erfindungsgemäße Verfahren zur Vorbereitung einer Vorrichtung zur Montage oder Demontage eines Reifens, mit den Merkmalen des Anspruchs 13, haben gegenüber dem Stand der Technik den Vorteil, dass die Vorrichtung zur Montage und Demontage eines Reifens an einer Felge eines Rades, die einen Grundkörper, wobei der Grundkörper mindestens eine Schiene aufweist, wobei an mindestens einer der Schienen mindestens eine arretierbare Laufschiene angeordnet ist, und ein Abdrückelement, wobei das Abdrückelement eine Abdrückschaufel, einen Abdrückarm und ein Hebelelement umfasst, aufweist, und die Vorrichtung mindestens zwei unterschiedlich geformte Auflagen für mindestens zwei unterschiedliche Arten von Rädern, wobei dies ein Rad eines Rollers, eines Tourenmotorrads, eines Motocrossmotorrads, eines PKWs oder dergleichen ist, umfasst, wobei mindestens eine Auflage (17) einen gebogenen Kopf (18) zur Ablage der Felge aufweist, wobei mindestens eine der Auflagen lösbar an mindestens einer Laufschiene befestigt werden kann, wodurch die Vorrichtung in einfacher Art und Weise durch unterschiedliche Auflagen für unterschiedliche Rädertypen verwendet werden kann. Denkbar wäre es, dass mindestens eine Schiene Markierungen aufweist, die beispielsweise Positionsangaben für die Laufschienen umfassen, die spezifisch für unterschiedliche Reifentypen und/oder Durchmesser sind. Die Laufschienen können mit unterschiedlichen Befestigungsmitteln arretiert werden, beispielsweise mit Klemmhebeln, Rastverbindungen, und Schrauben sowie Bolzen oder Splinten, die durch die jeweilige Laufschiene und die zugehörige Schiene geführt werden. Vorzugsweise sind der Grundkörper und/oder die Schienen aus einem Metall, einer Legierung oder einem Komposit-Material gefertigt, um den durch die bei der Montage auftretenden Kräfte entstehenden Verschleiß zu minimieren. Natürlich wären auch andere Materialien denkbar. Die Auflagen sind bevorzugt aus einem Kunststoff, einer Keramik, einem Komposit, einem Metall oder einer Metalllegierung gefertigt, wobei sie in einer besonders bevorzugten Ausführungsform mit einem Gummiüberzug versehen sind und/oder aus einem Material bestehen, welches weicher als eine übliche Felge ist. Dies hat den Vorteil, dass die zu bearbeitende Felge nicht von der Vorrichtung, insbesondere den Auflagen, zerkratzt wird.

Nach einer vorteilhaften Ausgestaltung der erfindungsgemäßen Vorrichtung ist am Grundkörper eine Zentrierstange angeordnet. Diese kann fest verbaut sein oder aber abnehmbar am Grundkörper befestigt werden. Denkbar wäre es, dass die Zentrierstange in eine Bohrung des Grundkörpers hineingeschraubt werden kann oder dass die Zentrierstange über eine Rastverbindung oder mittels einen oder mehrere Splinte mit dem Grundkörper verbunden wird. Weiterhin denkbar ist es, dass die Zentrierstange mindestens einen Haltering aufweist, der die Zentrierstange mindestens teilweise umschließt und als zusätzliche Auflage für die Felge fungieren kann, da die Zentrierstange bevorzugt einen Durchmesser hat, der für bestimmte Achslöcher einer Felge spezifisch ist. Diesbezüglich wäre es denkbar, dass unterschiedliche Zentrierstangen bereitgestellt werden, die für bestimmte Felgentypen vorgesehen sind. Weiterhin denkbar wäre es, dass die Zentrierstange kein gerader Stab ist, sondern spitz oder konisch zuläuft, sodass sie einen unterschiedlichen Durchmesser entlang ihrer Längsachse aufweist und der Arbeitsdurchmesser für die Achslöcher, der gegebenenfalls für unterschiedliche Rädertypen spezifisch sein kann, dadurch eingestellt wird, dass die Zentrierstange unterschiedlich weit in den Grundkörper hineingeschraubt wird.

Nach einer zusätzlichen vorteilhaften Ausgestaltung der erfindungsgemäßen Vorrichtung ist am Grundkörper mindestens ein Bein angeordnet. Vorzugsweise ist der Grundkörper als Dreibein ausgestaltet.

Nach einer diesbezüglichen vorteilhaften Ausgestaltung der erfindungsgemäßen Vorrichtung weist mindestens eines der Beine ein Gummifüßchen und/oder einen Dorn auf. Denkbar wäre es, dass diese ausklappbar sind, so dass für unterschiedliche Untergründe die Vorrichtung immer den besten Halt genießt. Denkbar wäre es diesbezüglich, dass der Dorn und das Gummifüßchen an einer Wippe angebracht sind, die mit dem jeweiligen Bein verbunden ist, und je nach Untergrund das Gummifüßchen oder der Dorn hinaus geklappt wird, wobei auch eine neutrale Stellung denkbar wäre, in der sowohl der Dorn als auch das Gummifüßchen näherungsweise orthogonal zum Bein stehen würden, sodass weder der Dorn noch das Gummifüßchen mit dem Untergrund in Kontakt treten würden.

Nach einer zusätzlichen vorteilhaften Ausgestaltung der erfindungsgemäßen Vorrichtung weist mindestens eine der Laufschienen eine Nut auf, wobei mindestens eine Auflage durch eine Nut-Feder-Verbindung in mindestens eine der Nuten einfügbar ist. Dabei stellt ein Teil der Auflage die Feder dar, während die Nut an der Laufschiene angeordnet ist. Denkbar wäre auch, dass die Nut keine geraden und/oder durchgehenden Nutwände aufweist, sondern leicht gebogene oder mit Aussparungen versehene Nutwände, in die ein Teil einer Auflage hineingreifen kann. In diesen Fällen wäre die Verbindung der Auflage und der Nut passgenauer und ließe sich nicht ohne weiteres verschieben, so dass ein falsches oder ungenaues Einsetzen der Auflage verhindert werden kann.

Nach einer diesbezüglichen vorteilhaften Ausgestaltung der erfindungsgemäßen Vorrichtung ist mindestens eine der Auflagen an mindestens einer der Nuten befestigbar. Denkbar wäre eine Klemm- oder Rastverbindung oder ein Splint oder Bolzen, der durch seitliche Öffnungen der Nutwände und des in die Nut eingreifenden Teils der Auflage hindurchgeführt wird.

Nach einer zusätzlichen vorteilhaften Ausgestaltung der erfindungsgemäßen Vorrichtung ist der gebogene Kopf mindestens einer der Auflagen mittels eines länglichen Halteelements mit der Laufschiene verbunden. Dieser ist bevorzugt an die Innenkontur eines Reifens oder eines Felgenkranzes angepasst oder anpassbar.

Nach einer zusätzlichen vorteilhaften Ausgestaltung der erfindungsgemäßen Vorrichtung sind der Grundkörper und/oder die Beine einklappbar. Dabei wäre es sowohl denkbar, dass die Beine an den Grundkörper geklappt werden, aber auch, dass die Beine mittels mindestens einem Gelenk in sich zusammengeklappt werden. Ebenfalls denkbar wäre es, dass die Beine ineinandergeschoben werden können, wie bei einem Teleskopstab. Auch beim Grundkörper wäre es denkbar, dass dieser über mindestens ein Gelenk, beispielsweise ein Scharnier, zusammengeklappt werden kann.

Nach einer zusätzlichen vorteilhaften Ausgestaltung der erfindungsgemäßen Vorrichtung ist der Abdrückarm verlängerbar und/oder über eine Nut-Feder-Verbindung in die Nut einer Laufschiene einfügbar, wodurch unterschiedlich lange Abdrückarme verwendet werden können.

Nach einer zusätzlichen vorteilhaften Ausgestaltung der erfindungsgemäßen Vorrichtung ist das Hebelelement direkt oder über ein Gelenk mit dem Abdrückarm verbunden. Die Verbindung kann dabei fest oder lösbar sein. Beispielsweise wäre es denkbar, dass das Hebelelement in eine Öffnung des Abdrückarmes eingeführt wird und dort einrastet. Denkbar wäre es auch, dass die Verbindung über mindestens ein Gelenk hergestellt wird, worüber sich der Hebelarm nach oben und/oder zur Seite bewegen lässt, was den Vorteil hätte, dass während des Abdrückvorgangs die Position des Benutzers nicht geändert werden muss.

Nach einer zusätzlichen vorteilhaften Ausgestaltung der erfindungsgemäßen Vorrichtung ist am Grundkörper und/oder der Zentrierstange eine Verdrehsicherung angeordnet, die die Felge gegen ein Verdrehen sichert. Denkbar wären ein Stopper oder eine Bremse, die gegen den Felgenkranz oder den Reifen drückt, oder ein Stab der durch die Felge hindurchgreift.

Das erfindungsgemäße Verfahren zur Vorbereitung einer Vorrichtung zur Montage oder Demontage eines Reifens, wobei die Vorrichtung eine Vorrichtung nach einem der Ansprüche 1 bis 12 ist und der Reifen auf einer Felge angeordnet ist oder angeordnet werden soll, hat gegenüber dem Stand der Technik den Vorteil, dass ein Abdrückelement am Grundkörper befestigt wird und eine passende Zentrierstange am Grundkörper befestigt wird, so dass die Felge formschlüssig auf die Zentrierstange aufgeschoben werden kann, mindestens eine flache Auflage an einer Laufschiene befestigt wird und mindestens eine Laufschiene so positioniert wird, dass, wenn die Felge auf die Zentrierstange aufgeschoben wird, die Felge oder der Reifen auf der mindestens einen Auflage abgelegt werden kann, oder mindestens eine Auflage mit einem gebogenen Kopf am Grundkörper befestigt wird und mindestens eine Laufschiene so positioniert wird, dass auf der mindestens einen Auflage die Felge abgelegt werden kann, wobei der Reifen vorzugsweise über dem Grundkörper zentriert ist, und der gebogene Kopf der mindestens einen Auflage den Reifen in der zentrierten Position fixiert, wodurch die Vorrichtung zwischen unterschiedlichen Anwendungen für unterschiedliche Räder in einfacher Art und Weise umgebaut werden kann.

Weitere Vorteile und vorteilhafte Ausgestaltung der Erfindung sind der nachfolgenden Beschreibung, den Ansprüchen und den Zeichnungen entnehmbar.

### Zeichnungen

Bevorzugte Ausführungsbeispiele des erfindungsgemäßen Gegenstands sind in den Zeichnungen dargestellt und werden im Folgenden näher erläutert. Es zeigen
- Fig. 1: eine schematische Darstellung eines Ausführungsbeispiels einer erfindungsgemäßen Vorrichtung,
- Fig. 2: eine schematische Darstellung eines Ausführungsbeispiels einer Laufschiene für eine erfindungsgemäße Vorrichtung,
- Fig. 3: eine schematische Darstellung eines Ausführungsbeispiels einer Auflage für eine erfindungsgemäße Vorrichtung,
- Fig. 4: eine schematische Darstellung eines Ausführungsbeispiels einer gebogenen Auflage für eine erfindungsgemäße Vorrichtung,
- Fig. 5: eine schematische Darstellung eines Ausführungsbeispiels einer in einer Laufschiene eingefügten Auflage für eine erfindungsgemäße Vorrichtung,
- Fig. 6: eine schematische Darstellung eines Ausführungsbeispiels einer Kombination einer gebogenen Auflage mit einem Abdrückarm mit Abdrückschaufel für eine erfindungsgemäße Vorrichtung.
- Fig. 7: eine schematische Darstellung eines weiteren Ausführungsbeispiels einer erfindungsgemäßen Vorrichtung ausgestattet für Motocrossräder,
- Fig. 8: eine schematische Darstellung eines weiteren Ausführungsbeispiels einer erfindungsgemäßen Vorrichtung ausgestattet für Rollerräder und
- Fig. 9: eine schematische Darstellung eines Abdrückarmes für eine erfindungsgemäße Vorrichtung mit zusätzlichem Gelenk.

### Beschreibung der Ausführungsbeispiele

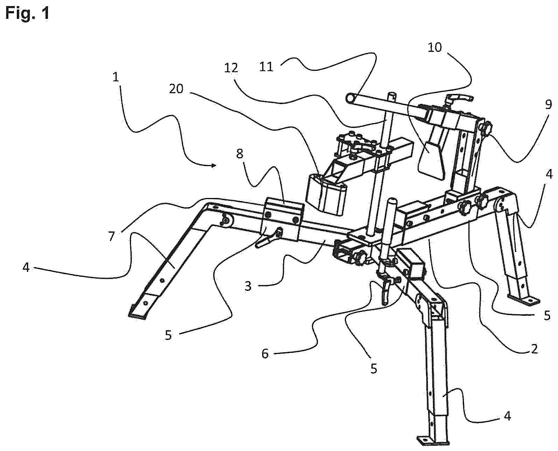

Fig. 1 zeigt eine schematische Darstellung eines Ausführungsbeispiels einer erfindungsgemäßen Vorrichtung 1. Die Vorrichtung 1 umfasst einen Grundkörper 2, der Schienen 3 aufweist, die in Beinen 4 enden. Entlang der Schienen 3 sind Laufschienen 5 beweglich angeordnet, die über Klemmelemente 6 an der Schiene 3 arretiert werden können. Die Laufschienen 5 weisen jeweils eine Nut 7 auf, in die die Auflagen 8 eingesetzt sind. Ein Abdrückarm 9 ist ebenfalls an einer Laufschiene 5 befestigt. Am Abdrückarm 9 ist eine Abdrückschaufel 10 angebracht, welche zwischen Reifen und Felge greifen kann, um den Reifen von dieser herunter zu hebeln. Am oberen Ende des Abdrückarmes 9 oberhalb der Abdrückschaufel 10 ist eine Vertiefung vorgesehen für ein Hebelelement 11, welches in diese eingreift, um Druck auf die Abdrückschaufel 10 auszuüben. Am Grundkörper 2 ist zudem eine Zentrierstange 12 angeschraubt, die die Nabe der Felge aufnehmen kann. An der Zentrierstange 12 ist weiterhin ein Stopper 20 angeordnet, welcher gegen die Felge drücken kann, um sie an Ort und Stelle zu halten.

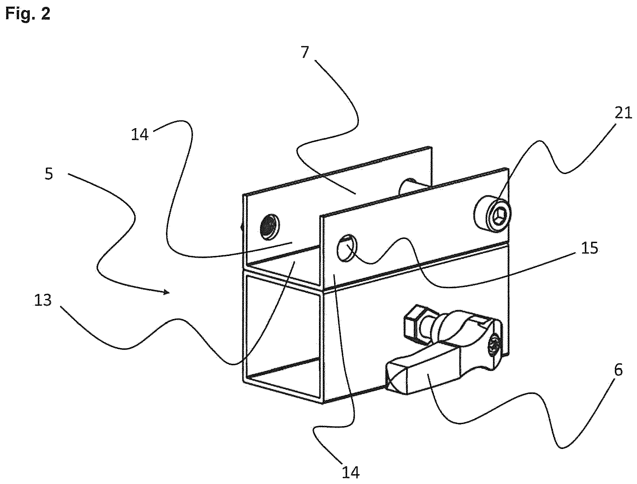

Fig. 2 zeigt eine schematische Darstellung eines Ausführungsbeispiels einer Laufschiene 5 für eine erfindungsgemäße Vorrichtung 1. Die Laufschiene 5, die mit einem Klemmelement 6 an einer Schiene 3 befestigt werden kann, weist an ihrer Oberseite eine Nut 7 auf, die einen Nutboden 13 und zwei Nutwände 14 umfasst. In den Nutwänden 14 sind Löcher 15 vorgesehen, um die Auflage 8 in der Nut 7 zu befestigen, beispielsweise durch einen Bolzen 21.

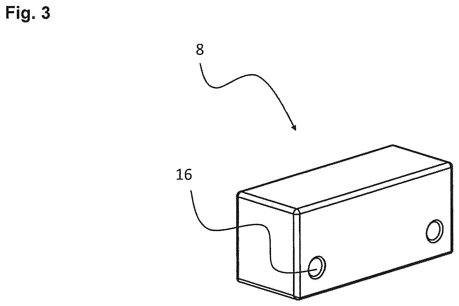

Fig. 3 zeigt eine schematische Darstellung eines Ausführungsbeispiels einer Auflage 8 für eine erfindungsgemäße Vorrichtung 1. Die Auflage 8 ist wie auch die Nutwände 14 mit Löchern 16 ausgestattet, durch die ein Bolzen 21 oder alternativ auch ein Splint durchgeführt werden kann, um die Auflage 8 an der Nut 7 zu befestigen.

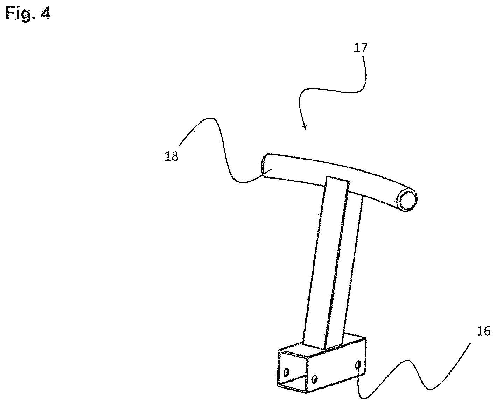

Fig. 4 zeigt eine schematische Darstellung eines Ausführungsbeispiels einer gebogenen Auflage 17 für eine erfindungsgemäße Vorrichtung 1. Die gebogene Auflage 17 umfasst einen gebogenen Kopf 18 und weist ebenfalls Löcher 16 auf zur Befestigung in einer Nut 7 einer Laufschiene 5. Der gebogene Kopf 18 wird an die Innenkontur des Felgenkranzes gedrückt, um die Felge zentriert zu halten.

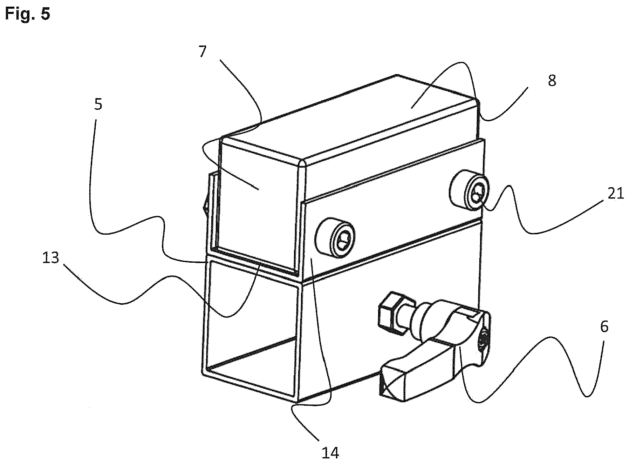

Fig. 5 zeigt eine schematische Darstellung eines Ausführungsbeispiels einer in eine Laufschiene 5, gemäß Fig. 2, eingefügten Auflage 8, gemäß Fig. 3, für eine erfindungsgemäße Vorrichtung 1.

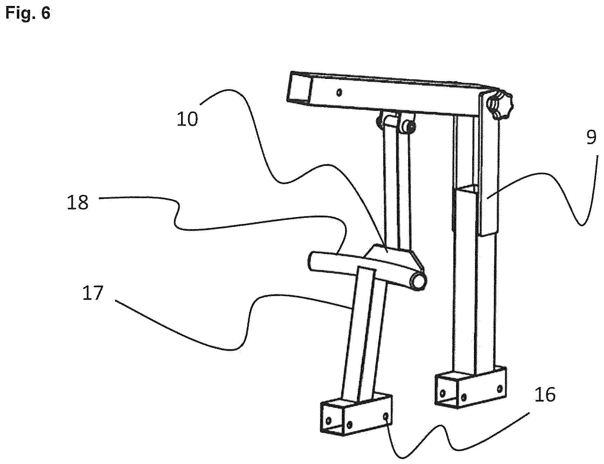

Fig. 6 zeigt eine schematische Darstellung eines Ausführungsbeispiels einer Kombination einer gebogenen Auflage 17 mit einem Abdrückarm 9 mit Abdrückschaufel 10 für eine erfindungsgemäße Vorrichtung 1.

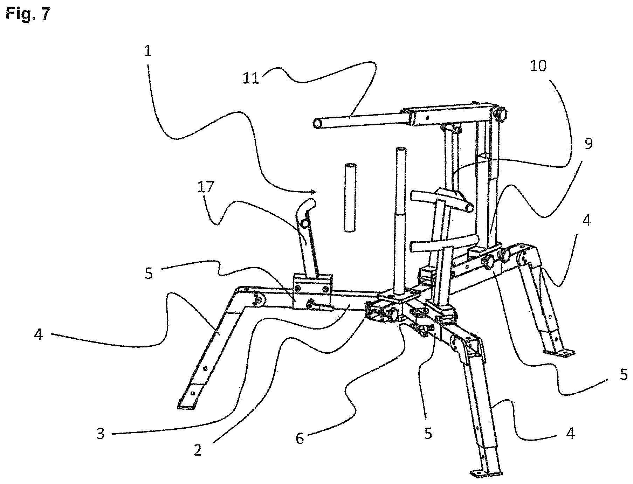

Fig. 7 zeigt eine schematische Darstellung eines weiteren Ausführungsbeispiels einer erfindungsgemäßen Vorrichtung 1 ausgestattet für Motocrossräder.

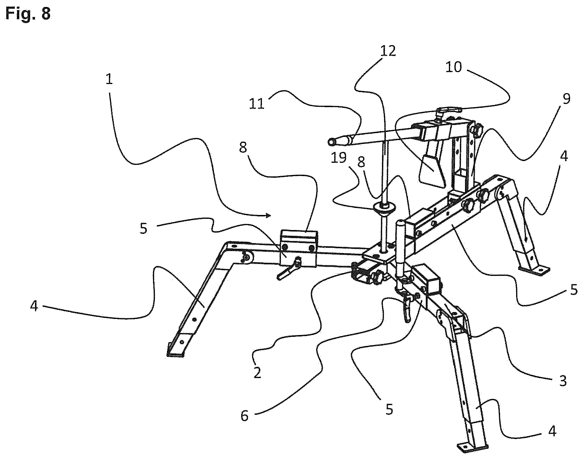

Fig. 8 zeigt eine schematische Darstellung eines weiteren Ausführungsbeispiels einer erfindungsgemäßen Vorrichtung 1 ausgestattet für Rollerräder. Die erfindungsgemäße Vorrichtung 1 in der dargestellten Ausführungsform weist eine verkleinerte Zentrierstange 12 und einen Konus 19 auf, zur besseren Ausrichtung der Felge.

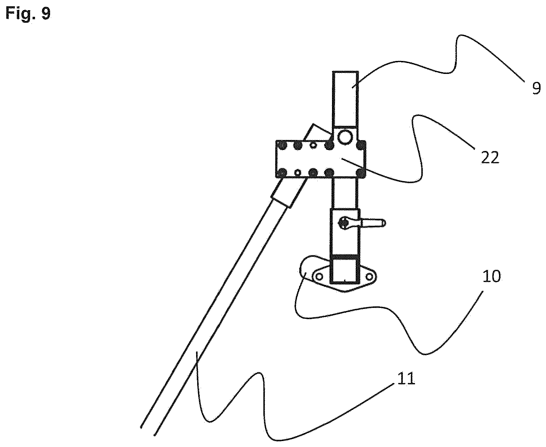

Fig. 9 zeigt eine schematische Darstellung eines Abdrückarmes 9 für eine erfindungsgemäße Vorrichtung 1 mit einem zusätzlichen Gelenk 22. Das zusätzliche Gelenk 22 ist so am Abdrückarm angeordnet, dass ein Benutzer das Hebelelement 11 immer aus derselben Position benutzen kann und lediglich das Gelenk 22 bewegt werden muss, wodurch immer die maximale Krafteinwirkung auf die Abdrückschaufel 10 ausgeübt werden kann.

Alle hier dargestellten Merkmale können sowohl einzeln als auch in beliebiger Kombination miteinander erfindungswesentlich sein.

### Bezugszahlenliste

- 1: Vorrichtung
- 2: Grundkörper
- 3: Schiene
- 4: Bein
- 5: Laufschiene
- 6: Klemmelement
- 7: Nut
- 8: Auflage
- 9: Abdrückarm
- 10: Abdrückschaufel
- 11: Hebelelement
- 12: Zentrierstange
- 13: Nutboden
- 14: Nutwand
- 15: Loch
- 16: Loch
- 17: gebogene Auflage
- 18: gebogener Kopf
- 19: Konus
- 20: Stopper
- 21: Bolzen
- 22: Gelenk

## Patentansprüche

1. Vorrichtung (1) zur Montage und Demontage eines Reifens an einer Felge eines Rades,
- mit einem Grundkörper (2), wobei der Grundkörper (2) mindestens eine Schiene (3) aufweist, wobei an mindestens einer der Schienen (3) mindestens eine arretierbare Laufschiene (5) angeordnet ist,
- mit einem Abdrückelement (5), wobei das Abdrückelement eine Abdrückschaufel (10), einen Abdrückarm (9) und ein Hebelelement (11) umfasst,
**dadurch gekennzeichnet,**
**dass** die Vorrichtung (1) mindestens zwei unterschiedlich geformte Auflagen (8, 17) für mindestens zwei unterschiedliche Arten von Rädern, wobei dies Räder eines Rollers, Tourenmotorrads, eines Motocrossmotorrads, eines PKWs oder dergleichen sein können, umfasst, wobei mindestens eine Auflage (17) einen gebogenen Kopf (18) zur Ablage der Felge aufweist, wobei mindestens eine der Auflagen (8, 17) lösbar an mindestens einer Laufschiene (5) befestigt werden kann.

2. Vorrichtung (1), nach Anspruch 1,
**dadurch gekennzeichnet,**
**dass** am Grundkörper (2) eine Zentrierstange (12) angeordnet ist.

3. Vorrichtung (1), nach Anspruch 1 oder Anspruch 2,
**dadurch gekennzeichnet,**
**dass** am Grundkörper (2) mindestens ein Bein (4) angeordnet ist.

4. Vorrichtung (1), nach Anspruch 3,
**dadurch gekennzeichnet,**
**dass** mindestens eines der Beine (4) am grundkörperfernen Ende eine verbreiterte Auflagefläche aufweist.

5. Vorrichtung (1), nach Anspruch 3 oder Anspruch 4,
**dadurch gekennzeichnet,**
**dass** mindestens eines der Beine (4) ein Gummifüßchen und/oder einen Dorn aufweist.

6. Vorrichtung (1), nach einem der vorhergehenden Ansprüche,
**dadurch gekennzeichnet,**
**dass** mindestens eine der Laufschienen (5) eine Nut (7) aufweist, wobei mindestens eine Auflage (8, 17) durch eine Nut-Feder-Verbindung in mindestens eine der Nuten (7) einfügbar ist.

7. Vorrichtung (1), nach Anspruch 6,
**dadurch gekennzeichnet,**
**dass** mindestens eine der Auflagen (8, 17) an mindestens einer der Nuten (7) befestigbar ist.

8. Vorrichtung (1), nach einem der vorhergehenden Ansprüche,
**dadurch gekennzeichnet,**
**dass** der gebogene Kopf (18) mindestens einer der Auflagen (17) mittels eines länglichen Halteelements mit der Laufschiene (5) verbunden ist.

9. Vorrichtung (1), nach einem der vorhergehenden Ansprüche,
**dadurch gekennzeichnet,**
**dass** der Grundkörper (2) und/oder die Beine (4) einklappbar sind.

10. Vorrichtung (1), nach einem der vorhergehenden Ansprüche,
**dadurch gekennzeichnet,**
**dass** der Abdrückarm (9) verlängerbar ist und/oder über eine Nut-Feder-Verbindung in die Nut (7) einer Laufschiene (5) einfügbar ist.

11. Vorrichtung (1), nach einem der vorhergehenden Ansprüche,
**dadurch gekennzeichnet,**
**dass** das Hebelelement (11) direkt oder über ein Gelenk mit dem Abdrückarm (9) verbunden ist.

12. Vorrichtung (1), nach einem der vorhergehenden Ansprüche,
**dadurch gekennzeichnet,**
**dass** am Grundkörper (2) und/oder an der Zentrierstange (12) mindestens eine Verdrehsicherung angeordnet ist-.

13. Verfahren zur Vorbereitung einer Vorrichtung zur Montage oder Demontage eines Reifens, wobei die Vorrichtung eine Vorrichtung (1) nach einem der Ansprüche 1 bis 12 ist und der Reifen auf einer Felge angeordnet ist oder angeordnet werden soll,
**dadurch gekennzeichnet,**
**dass**
ein Abdrückelement am Grundkörper (2) befestigt wird
und
eine passende Zentrierstange (12) am Grundkörper (2) befestigt wird, so dass die Felge formschlüssig auf die Zentrierstange (12) aufgeschoben werden kann, mindestens eine Auflage (8) an einer Laufschiene (5) befestigt wird und mindestens eine Laufschiene (5) so positioniert wird, dass, wenn die Felge auf die Zentrierstange (12) aufgeschoben wird, die Felge oder der Reifen auf der mindestens einen Auflage (8) abgelegt werden kann,
oder
mindestens eine Auflage (17) mit einem gebogenen Kopf (18) am Grundkörper (2) befestigt wird und mindestens eine Laufschiene (5) so positioniert wird, dass auf der mindestens einen Auflage (17) die Felge abgelegt werden kann, wobei der Reifen vorzugsweise über dem Grundkörper (2) zentriert ist, und der gebogene Kopf (18) der mindestens einen Auflage (17) den Reifen in der zentrierten Position fixiert.

## Claims

1. A device (1) for mounting and demounting a tyre onto, or from, a rim of a wheel,
- including a main body (2), said main body (2) having at least one rail (3), with at least one of said rails (3) having at least one lockable running rail (5) arranged thereon,
- including a bead breaker element (5), said bead breaker element comprising a bead breaker blade (10), a bead breaker arm (9), and a lever element (11),
**characterised in that**
said device (1) comprises at least two differently shaped supports (8, 17), for at least two different types of wheel, respectively, which may be a wheel for a scooter, a touring bike, a motocross bike, a passenger car or the like, with at least one support (17) having a bent head (18) for depositing the rim, with at least one of the supports (8, 17) being detachably fastenable to at least one running rail (5).

2. The device (1) as claimed in claim 1,
**characterised in that**
the main body (2) has a centring bar (12) arranged thereon.

3. The device (1) as claimed in claim 1 or claim 2,
**characterised in that**
the main body (2) has at least one leg (4) arranged thereon.

4. The device (1) as claimed in claim 3,
**characterised in that**
at least one of said legs (4) has an enlarged support surface formed on its end facing away from the main body.

5. The device (1) as claimed in claim 3 or claim 4,
**characterised in that**
at least one of the legs (4) has a rubber foot and/or a mandrel.

6. The device (1) as claimed in any of the preceding claims,
**characterised in that**
at least one of the running rails (5) has a groove (7), with at least one support (8, 17) being insertable into at least one of the grooves (7) by means of a tongue-and-groove connection.

7. The device (1) as claimed in claim 6,
**characterised in that**
at least one of the supports (8, 17) can be fastened to at least one of the grooves (7).

8. The device (1) as claimed in any of the preceding claims,
**characterised in that** the bent head (18) of at least one of the supports (17) is connected to the running rail (5) by means of an elongate retention member.

9. The device (1) as claimed in any of the preceding claims,
**characterised in that**
the main body (2) and/or the legs (4) are foldable.

10. The device (1) as claimed in any of the preceding claims,
**characterised in that**
the bead breaker arm (9) is extensible and/or may be inserted into the groove (7) of a running rail (5) via a tongue-and-groove connection.

11. The device (1) as claimed in any of the preceding claims,
**characterised in that**
the lever element (11) is directly connected to the bead breaker arm (9) or is connected thereto via a joint.

12. The device (1) as claimed in any of the preceding claims,
**characterised in that**
the main body (2) and/or the centring bar (12) have/has at least one anti-rotation device arranged thereon.

13. A method of preparing a device for mounting or demounting a tyre, said device being a device (1) as claimed in any one of claims 1 to 12 and said tyre being, or being supposed to be, arranged on a wheel rim, **characterised in that**
a bead breaker element is fastened to the main body (2)
and
a suitably dimensioned centring bar (12) is fastened to the main body (2) such that the wheel rim may be positively slid onto the centring bar (12), at least one support (8) is fastened to a running rail (5), and at least one running rail (5) is positioned in such a manner that, as the rim is slid onto the centring bar (12), the rim or the tyre may be placed onto the at least one support (8),
or
at least one support (17) having a bent head (18) is fastened to the main body (2) and at least one running rail (5) is positioned in such a manner that the rim may be placed onto said at least one support (17), with the tyre being preferably centred above the main body (2) and the bent head (18) of the at least one support (17) holding the tyre fixedly in its centred position.

## Revendications

1. Dispositif (1) de montage et de démontage d'un pneu sur une jante d'une roue,
- pourvu d'un corps de base (2), le corps de base (2) présentant au moins un rail (3), au moins un rail de roulement (5) avec système d'arrêt étant disposé sur au moins un des rails (3),
- pourvu d'un élément de décollage (5), l'élément de décollage comprenant une pelle de décollage (10), un bras de décollage (9) et un levier (11),
**caractérisé en ce que**
ledit dispositif (1) comprend au moins deux éléments d'appui (8, 17) de forme différente adaptés à au moins deux types différents de roues, celles-ci pouvant être des roues de scooter, de moto routière, de moto de cross, de véhicule automobile ou autres roues de ce type, au moins un élément d'appui (17) présentant une tête incurvée (18) sur laquelle la jante est déposée, au moins un de ces éléments d'appui (8, 17) pouvant être fixé de manière amovible sur au moins un rail de roulement (5).

2. Dispositif (1) selon la revendication 1,
**caractérisé en ce que**
une tige de centrage (12) est disposée sur le corps de base (2).

3. Dispositif (1) selon la revendication 1 ou selon la revendication 2,
**caractérisé en ce que**
au moins une jambe (4) est disposée sur le corps de base (2).

4. Dispositif (1) selon la revendication 3,
**caractérisé en ce que**
au moins une des jambes (4) présente une surface d'appui élargie au niveau de extrémité éloignée du corps de base.

5. Dispositif (1) selon la revendication 3 ou selon la revendication 4,
**caractérisé en ce que**
au moins une des jambes (4) présente un pied en caoutchouc et/ou une pointe en métal.

6. Dispositif (1) selon l'une quelconque des revendications précédentes,
**caractérisé en ce que**
au moins un des rails de roulement (5) présente une rainure (7), au moins un élément d'appui (8, 17) pouvant être inséré dans au moins une des rainures (7) grâce à un assemblage à rainure et languette.

7. Dispositif (1) selon la revendication 6,
**caractérisé en ce que**
au moins un des éléments d'appui (8, 17) peut être fixé sur au moins une des rainures (7).

8. Dispositif (1) selon l'une quelconque des revendications précédentes,
**caractérisé en ce que**
la tête incurvée (18) d'au moins un des éléments d'appui (17) est reliée au rail de roulement (5) au moyen d'un élément de maintien de forme allongée.

9. Dispositif (1) selon l'une quelconque des revendications précédentes,
**caractérisé en ce que**
le corps de base (2) et/ou les jambes (4) sont rabattables.

10. Dispositif (1) selon l'une quelconque des revendications précédentes,
**caractérisé en ce que**
le bras de décollage (9) peut être rallongé et/ou peut être inséré dans la rainure (7) d'un rail de roulement (5) grâce à un assemblage à rainure et languette.

11. Dispositif (1) selon l'une quelconque des revendications précédentes,
**caractérisé en ce que**
le levier (11) est relié au bras de décollage (9) de manière directe ou par le biais d'une articulation.

12. Dispositif (1) selon l'une quelconque des revendications précédentes,
**caractérisé en ce que**
au moins un dispositif anti-torsion est disposé sur le corps de base (2) et/ou sur la tige de centrage (12).

13. Procédé destiné à la préparation d'un dispositif de montage ou de démontage d'un pneu, le dispositif étant un dispositif (1) selon l'une quelconque des revendications 1 à 12 et le pneu étant disposé ou devant être disposé sur une jante,
**caractérisé**
**en ce que**
un élément de décollage est fixé sur le corps de base (2)
et
une tige de centrage (12) appropriée est fixée sur le corps de base (2) de telle sorte que la jante peut être emboîtée sur la tige de centrage (12) par conjugaison de formes, au moins un élément d'appui (8) est fixé sur un rail de roulement (5) et au moins un rail de roulement (5) est positionné de telle sorte que, lorsque la jante est emboîtée sur la tige de centrage (12), la jante ou le pneu peut être déposé(e) sur ledit au moins un élément d'appui (8),
ou
au moins un élément d'appui (17) pourvu d'une tête incurvée (18) est fixé sur le corps de base (2) et au moins un rail de roulement (5) est positionné de telle sorte que la jante peut être déposée sur ledit au moins un élément d'appui (17), le pneu étant de préférence centré au-dessus du corps de base (2) et la tête incurvée (18) dudit au moins un élément d'appui (17) fixant le pneu dans ladite position centrée.
